(19) Europäisches Patentamt

European Patent Office

Office européen des brevets

(11) EP 1 640 919 A2

(12) EUROPEAN PATENT APPLICATION

(43) Date of publication:
29.03.2006 Bulletin 2006/13

(51) Int Cl.:
G06T 11/20 (2006.01)

(21) Application number: 05255586.9

(22) Date of filing: 13.09.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 21.09.2004 JP 2004273212

(71) Applicant: Hewlett-Packard Development
Company, L.P.
Houston, TX 77070 (US)

(72) Inventor: Yamamoto, Akio
Tokyo (JP)

(74) Representative: Exell, Jonathan Mark et al
Williams Powell
Morley House
26-30 Holborn Viaduct
London EC1A 2BP (GB)

(54) **Method, apparatus, processor arrangement, and computer-readable medium storing program for displaying network data**

(57) In a method and an apparatus for displaying network data, nodes are segmented into multiple groups or layers based on their precalculated importance (i.e., static importance) values. A layered structure is constructed based on the importance values of the nodes. A data visualization is generated starting from the nodes on the layer with the highest importance value. While shifting from one node to another, a predetermined node is set as an origination node, and the importance values of the nodes are dynamically updated based on numerous changes in conditions, such as the importance values of selected nodes and the trust relationships of links between the selected nodes.

FIG. 2

EP 1 640 919 A2

Printed by Jouve, 75001 PARIS (FR)

**Description**

RELATED APPLICATIONS

The present application is based on, and claims priority from, Japanese Application Number 2004-273212, filed September 21, 2004, the disclosure of which is hereby incorporated by reference herein in its entirety.

TECHNICAL FIELD

The present invention relates to a method and an apparatus for visualizing associative network data including nodes arranged based on their importance values, and links connecting the nodes.

BACKGROUND

Various elements such as the motive of consumers, advertisingmedia, stores, manufacturers, and specialists (e.g., reviewers) etc. are associated with one another in human daily consumption activities. These elements have various relationships with one another, and consumers can obtain various information representing the relationships between the elements. However, due to the enormous amount of such information, it may be impossible for consumers to determine whichmanufacturer, store, specialist, and the like are reliable or can be trusted.

It is thus desired to define the various relationships between the elements relating to daily consumption activities, to obtain information about credibility or trust values of these elements, and to provide consumers with such information which the consumers can use in their consumption activities with high reliability.

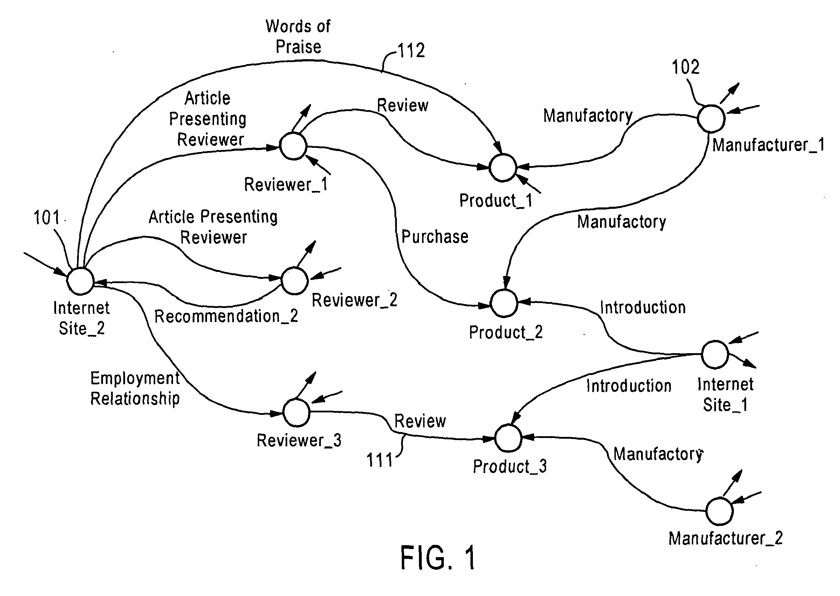

As discussed above, various elements such as Web sites, consumers, advertising media, stores, manufacturers, specialists (e.g., reviewers), and the like are associated with one another in human daily consumption activities. It is assumed that there are certain types of trust relationships between these elements. Fig. 1 is a network diagram of consumption activities including elements in the formof Internet (Web) sites, reviewers, articles (goods), shops (stores), manufacturers of goods, and the like. All elements in the consumption activities are designated as nodes, e.g., 101, 102, in the diagram of Fig. 1. The trust relationships among the elements are denoted in Fig. 1 as links, e.g., 111, 112, connected between the nodes or elements.

However, it is not easy to understand network diagrams of the type represented in Fig. 1 in complicated networks. Numerous attempts have been made to simplify and/or facilitate understanding of such network diagrams; however, not without drawbacks. For example, JP 04-322370 A ("NETWORK STRUCTURE DISPLAY DEVICE") proposes a method which defines a distance between a first node of interest and another, second node based on the number of links (number of connections) therebetween, and represents the second node in a smaller size if the second node is placed at a longer distance from (i.e., has a larger number of the connections to) the first node of interest. The method has drawbacks in that an attribute of the link between the nodes is not considered, and that it is possible to designate only one node of interest at a time.

JP 2004-227281 A ("DISPLAY METHOD AND DEVICE FOR ASSOCIATIVE NETWORK DATA") proposes a method which repeatedly replaces an important node and nodes connected thereto with one representative node, thereby obtaining a simple data representation without losing important connection information of the entire associative network structure. However, since the nodes directly connected to the important node are to be replaced, the method is limited to local processing.

Further, there is proposed a self-organizingmap (Tuevo Kohonen, "Self-Organizing Maps", Springer 1995) as a method for visualizing (displaying) mutually associative data. Although this method uses statistical properties of multivariate data to arrange similar data close to each other, it is necessary to represent input data as vectors, and thus the arrangement (display) result largely depends on how the input vectors are configured.

Thus, there is a need for a method and an apparatus which enable easy recognition of an overall perspective and proper understanding of information on a desired node in a complicated network.

SUMMARY OF THE INVENTION

As discussed above, data visualization of a large scale network including an enormous amount of nodes and links poses a problem in that the data structure is complex due to the large number of mutual connections among the nodes, and a direct representation of such complicated network data makes overall and detailed recognition thereof difficult.

Thus, according to an aspect of the present invention, nodes are segmented into multiple groups or layers based on their precalculated importance (i.e., static importance) values, a layered structure is constructed based on the importance values of the nodes, and data visualization is carried out successively from nodes on a predetermined layer, e. g. , the layer having the highest importance value. A method of calculating importance values of nodes is described in JP 2003-368802 A, now U.S. Application Serial No. 10/976,280 ("METHOD AND DEVICE FOR CALCULATING TRUST VALUES ON PURCHASES"), which is incorporated by reference herein in its entirety.

Upon switching data visualization from a certain origination node (or layer) to another destination node (or layer), if there are multiple possible transition paths, and the transition paths influence the importance value of the destination node, it is considered that the destination node has multiple importance values. If the degree (level) of association between the origination and destination nodes varies depending on which path is selected as the transition path, the difference in the degree of association between the origination and destination nodes may not be properly reflected.

Thus, according to another aspect of the present invention, in the process of displaying data while shifting from one node to another, a predetermined node is set as an origination node, and the importance values of the nodes are dynamically updated based on numerous changes in conditions, such as the importance values of selected nodes and the trust relationships of links between the selected nodes. The updated importance values are updated on the subsequent data visualization.

According to an aspect of the present invention, an apparatus is provided for displaying associative network data including nodes having static importance values and being arranged in an order of the static importance values, and links connecting the nodes, the apparatus comprising:

(a) a segmenting element for segmenting the nodes into a number of layers according to the static importance values of the nodes; (b) a displaying element for displaying all nodes on a first layer among said layers;
(c) an inputting element for accepting a designation of a first node among the nodes on the first layer, a designation of a first distance from the first node, and a designation of a second layer among said layers; and
(d) a displaying element for displaying a second node existing within the first distance from the first node on the second layer, and displaying at least one of (d-1) a line connecting the first node and the second node and (d-2) the static importance value of the second node.

According to a further aspect of the present invention, an easy-to-understand data visualization or display is generated upon a transition to another layer or node by the apparatus further including:

(e) an accepting element for accepting a designation of a second node on the second layer, and a designation of a second distance from the second node; and
(f) a displaying element for displaying a third node existing within the second distance from the second node, and displaying at least one of (f-1) a line connecting the second node and the third node and (f-1) the static importance value of the third node.

According to another aspect of the present invention, it is possible to display data by the apparatus in such a manner as to allow a user to easily understand it by changing a property, such as a color or a type, of a line connecting the nodes according to a distance between the nodes.

According to still another aspect of the present invention, a dynamic importance value of the second node can be calculated and displayed by the apparatus based on information including at least one of (i) an attribute value associated with the link between the nodes, (ii) the static importance value of the first node, (iii) the static importance value of the second node, and (iv) the first distance.

According to still further aspects of the present invention, a process of displaying associative network data, a computer readable medium storing therein a program for execution by a computer to perform such a process, and a processor arrangement for performing the process are also provided.

The above and still further objects, features and advantages of the present invention will become apparent upon consideration of the following detailed description of the specific embodiments thereof, especially when taken in connection with the accompanying drawings.

BRIEF DESCRIPTION OF THE DRAWINGS

The embodiments of the present invention are illustrated byway of example, and not by limitation, in the figures of the accompanying drawings, wherein elements having the same reference numeral designations represent like elements throughout.

Fig. 1 is a network diagram describing the basic concept of trust relationships.

Fig. 2 is ablockdiagramof an embodiment of an apparatus in accordance with the present invention.

Fig. 3 is a network graph in which elements are represented as nodes, and their trust relationships are represented as links in accordance with an embodiment of the present invention.

Fig. 4 is a network graph in accordance with an embodiment of the present invention.

Fig. 5 is a diagram illustrating how information on an adjacency list is stored in a list format in accordance with an embodiment of the present invention.

Fig. 6 is a network graph showing multiple transition paths between an origination node and a destination node in accordance with an embodiment of the present invention.

Fig. 7 is a network graph showing transition paths used for calculating dynamic importance values of nodes in accordance with an embodiment of the present invention.

Fig. 8 is a network graph showing dynamic importance values of multiple destination nodes when an origination node is selected in accordance with an embodiment of the present invention.

Fig. 9 is a flowchart of a process in accordance with an embodiment of the present invention.

Fig. 10 is an input network graph with associative network data to be visualized in accordance with an embodiment of the present invention.

Figs. 11-15 are data visualizations of the network graph of Fig. 10 generated in accordance with an embodiment of the present invention.

## DETAILED DESCRIPTION OF EMBODIMENTS OF THE PRESENT INVENTION

Before the embodiments of the invention are explained in detail, it is to be understood that the invention is not limited in its application to the details of construction and the arrangements of components set forth in the following description or illustrated in the drawing. The invention is capable of other embodiments and of being practiced or being carried out in various ways. Also, it is understood that the phraseology and terminology used herein are for the purpose of description and should not be regarded as limiting. The use of letters to identify steps of a method or process is simply for identification and is not meant to indicate that the steps should be performed in a particular order.

## Embodiment 1

A description will now be given of a method and an apparatus according to Embodiment 1 for generating a data visualization of associative network data in a network that include nodes arranged in an order of their importance values, and links connecting the nodes and having associated attribute values. The data visualization is generated by dynamically calculating and displaying, or otherwise outputting, importance values of selected nodes.

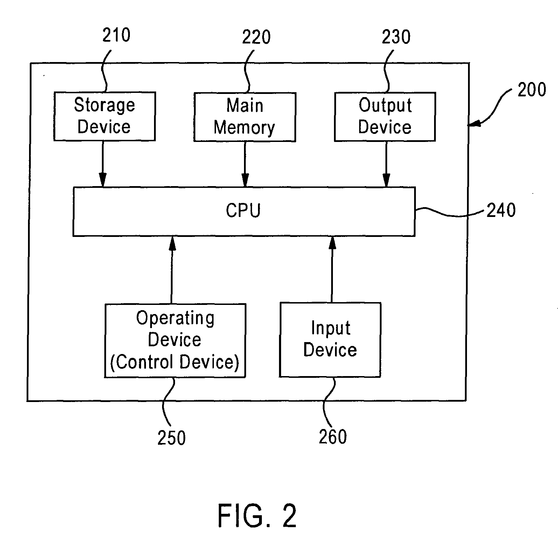

Fig. 2 illustrates a block diagram of an embodiment of an apparatus, or display unit 200, in accordance with the present invention. Display unit 200 includes a storage unit 210, a main memory 220, an output unit 230, a central processing unit (CPU) 240, an operating unit (control unit) 250, and an input unit 260. A user inputs necessary information from the operating unit 250. The CPU 240 carries out predetermined arithmetic operations on information stored in the storage unit 210, or information input from the input unit 260, and outputs processed results via the output unit 230.

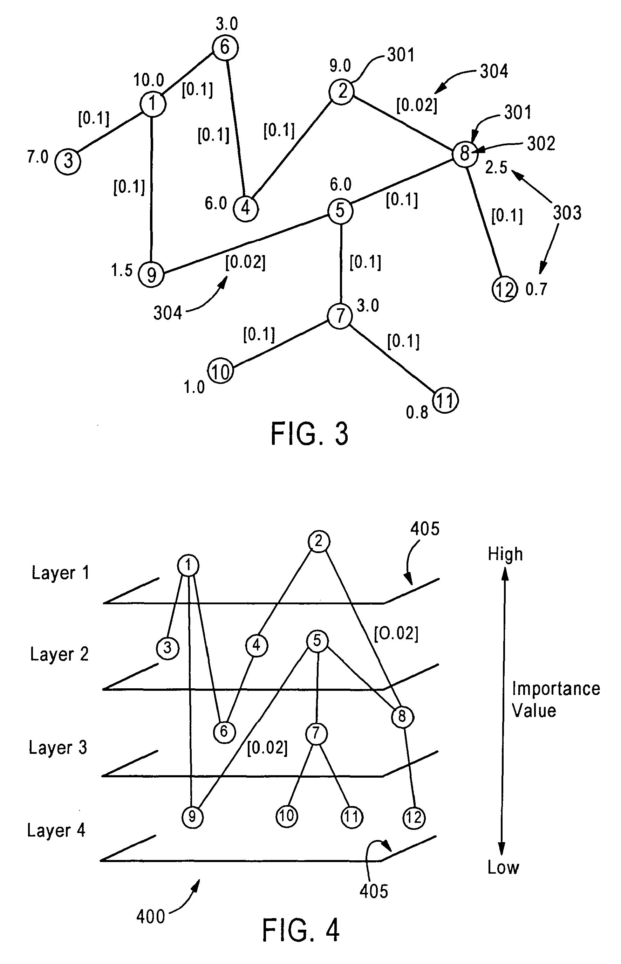

Fig. 3 is a network graph in which elements are represented as nodes, and their trust relationships are represented as links. The elements in daily consumption activities and their trust relationships can be extracted from various information sources, such as questionnaires, Web pages, magazines, electronic bulletin boards, etc. In Fig. 3, each circle, such as 301, represents a node or element, a first number in the circle, such as 302, represents a unique identifier assigned to the node, and a second number, such as 303, outside the circle represents a static importance value of the node. In addition, a third number in brackets, such as 304, indicates an attribute value of the associated link between two of the nodes. In the particular example of Fig. 3, the links between node 2 and node 8 and between node 9 and node 5 have an attribute value of 0.02.

A description will now be given of Embodiment 1 of the present invention with reference to Fig. 4 in the following order:

    (1) Segmenting of nodes in the order of their importance values;
    (2) Representation and storage of associative network data;
    (3) Calculation of dynamic importance values;
    (4) Dynamic update of importance values;
    (5) Output or display of node information;
    (6) Management of access history.

A detailed description will now be given of these respective items.

## (1) Segmenting of nodes in the order of their importance values

The nodes are first segmented into multiple groups in the order of their precalculated importance (i.e., static importance) values. A method for calculating importance values of the nodes is described in JP 2003-368802 A, now U. S. Application SerialNo. 10/976,280 ("METHODANDAPPARATUSFORCALCULATINGTRUST VALUES ON PURCHASES"). The following two methods are examples of how the nodes can be segmented, but other methods are not excluded.

    (a) segmenting of nodes by setting a constant number of nodes in each group;
    (b) segmenting of nodes by setting a predetermined range of importance values for nodes in each group.

A description will now be given of a specific example. It is assumed that the importance values are assigned respectively to nodes 1 to 12 as shown below.

    node 1 : 10.0
    node 2 : 9.0
    node 3 : 7.0
    node 4 : 6.0
    node 5 : 6.0
    node 6 : 3.0
    node 7 : 3.0
    node 8 : 2.5
    node 9 : 1.5
    node 10 : 1.0
    node 11 : 0.8
    node 12 : 0.7

(a) A description will now be given of the segmenting method that sets a constant number of nodes in each group. If the nodes are grouped into four groups, since the total number of the nodes is 12, each group includes three nodes as exemplarily shown below.

    group 1 : node 1, node 2, node 3
    group 2 : node 4, node 5, node 6
    group 3 : node 7, node 8, node 9
    group 4 : node 10, node 11, node 12

(b) A description will now be given of the segmenting method that sets a predetermined range of importance values for nodes in each group. For examples, the following ranges of importance values are set for groups 1-4.

    $7.5 \leq$ importance values of nodes in group $1 \leq 10$
    $5 \leq$ importance values of nodes in group $2 < 7.5$
    $2.5 \leq$ importance values of nodes in group $3 < 5$
    $0 \leq$ importance values of nodes in group $4 < 2.5$

The segmenting based on the ranges of the node importance values described above results in the following four groups.

    group 1 : node 1, node 2
    group 2 : node 3, node 4, node 5
    group 3 : node 6, node 7, node 8
    group 4 : node 9, node 10, node 11, node 12

In the following description, the segmenting or grouping is carried out according to (b) the method of grouping nodes by setting a predetermined range of importance values for nodes in each group.

<u>(2) Representation and storage of associative network data</u>

As a method of representing the associative network data, a description will now be given of a node list with node information on the respective layers, a link list with information on the connections among the nodes, and an adjacency list with information on the nodes that are connected to each of the nodes on the node list.

<u>(2-1) Creation of node list</u>

In this embodiment, the nodes are arranged in layers, each layer corresponding to one of the groups segmented in step (1). The layers and the respective nodes are preferably represented in Format 1 as follows.

$$\texttt{layer } n\texttt{: node 1, node 2, ..., node } m \qquad \texttt{(Format 1)}$$

where $n$ is layer identifier, and $m$ is node identifier of nodes on layer $n$. The nodes and layers (405, Fig. 4) in this particular example are represented in Format 1 as follows (Fig. 4).

```
layer 1: node 1, node 2
layer 2: node 3, node 4, node 5
layer 3: node 6, node 7, node 8
layer 4: node 9, node 10, node 11, node 12
```

<u>(2-2) Creation of link list</u>

In this embodiment, the link list is preferably represented in Format 2 as follows.

$$\texttt{link } k\_l\texttt{: node } k\texttt{, node } l\texttt{, [link attribute value] (Format 2)}$$

where $k$ and $1$ are node identifiers, "link $k\_1$" denotes the link between node $k$ and node $1$, "node $k$" and "node $1$" denote nodes at both ends of link $k\_1$, and " [link attribute value]" denotes an attribute value of link $k\_1$.

The link list in this partial example is represented in Format 2 as follows.

```
link 1_3 : node 1, node 3
link 1_9 : node 1, node 9
link 2_4 : node 2, node 4
link 2_8 : node 2, node 8, 0.02
link 5_9 : node 5, node 9, 0.02
link 7_10 : node 7, node 10
```

where "0.02" represents a characteristic of propagation (described herein below), which is the attribute value of link 5_9 and link 2_8, and is 0.02.

<u>(2-3) Information in adjacency list</u>

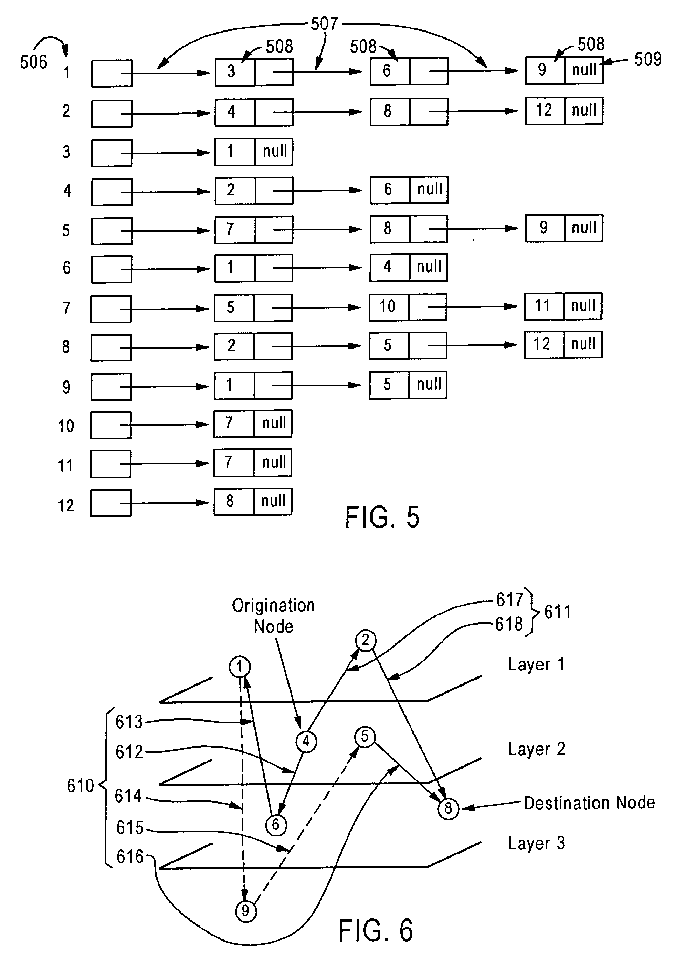

In this embodiment, information in the adjacency list is stored in a list format as shown in Fig. 5. The nodes are listed in the leftmost column (506) of Fig. 5. By way of example, a description will now be given of the links (507) of node 1. Specifically, node 1 is connected to node 3, node 6, and node 9 (508), and "null" (509) next to node 9 indicates that node 9 represents a terminal end of the adjacency list of node 1.

<u>(3) Calculation of dynamic importance values</u>

Calculation of dynamic importance values of nodes is carried out along a path (a series of successively connected links) when a node of interest is changed, namely, when a transition takes place from a certain origination node to another, destination node.

After the user first designates a certain node as an "origination node", and then designates another node as a "destination node", the importance value of the destination node is dynamically changed. There are usually multiple paths from the origination node to the destination node. For example, as can be seen in Fig. 6, there are two paths 610 and 611 from origination node 4 to destination node 8. Path 610 includes successively connected links 612 (between nodes 4 and 6), 613 (between nodes 6 and 1) , 614 (between nodes 1 and 9), 615 (between nodes 9 and 5), and 616 (between nodes 5 and 8) . Path 611 includes successively connected links 617 (between nodes 4 and 2), and 618 (between nodes 2 and 8).

In accordance with an aspect of the present invention, the shortest path from the origination node to the destination node is chosen. That is, the importance value of the destination node is obtained assuming that the importance value of the origination node propagates along the shortest path. It can be considered that the origination node intentionally selected by the user has a certain degree of significance for the user, and thus, the shortest path is chosen to mostly reflect the influence of the origination node and the importance value of the origination node that propagates along the shortest path.

(3-1) Detection of shortest path

A search method known as "A* search" can be used to detect the shortest path between the nodes. The A*search method has been described in detail in P. E. Hart, N. J. Nilsson, B. Raphael: A Formal Basis for the Heuristic Determination of Minimum Cost Paths, IEEE Transactions on Systems Science and Cybernetics SSC4 (2), pp.100-107, 1968, and P.E.Hart, N.J.Nilsson, B.Raphael: Correction to "A Formal Basis for the Heuristic Determination of Minimum Cost Paths", SIGART Newsletter, 37, pp.28-29, 1972, which are incorporated by reference herein in their entireties. However, other search methods are not excluded. An evaluation function f(n) is preferably defined by Equation 1:

$$f(n) = g(n) + h(n) \qquad\qquad (Equation\ 1)$$

where g(n) and h(n) are defined as:

g(n): the cost of a path from the origination node to an *n-th* node n; and
h(n): an estimated cost of a path having the lowest cost from node n to the destination node.

In this embodiment, a cost of moving to a next node (the distance or the number of links thereto) as a simple heuristic function is employed as h (*n*). That is, h (n) is always 1 regardless of the next node *n.*
A description will now be given with reference to Fig. 6. By way of example, the description will be given of a search for the shortest path from node 4 (origination node) on layer 2 to node 8 (destination node) on layer 3. As discussed above, there are a first path 611: node 4 → node 2 → node 8, and a second path 610: node 4 → node 6 → node 1 → node 9 → node 5 → node 8, and the first path 611: node 4 → node 2 → node 8 is shorter than the second path 610. Thus, first path 611 is the shortest path.
The "A* search" method employed in this embodiment to execute the above search is preferably in the form of software, and a detailed description of the algorithm of the "A* search" method is omitted for the sake of simplicity.

(4) Dynamic update of importance values

The dynamic importance value of a node according to this embodiment of the present invention is preferably defined by Equation 2:

$$impd = imps + (imps\_org \times prop\_rate \times 1/distance) \quad (Equation\ 2)$$

where "impd" denotes the dynamic importance value of the destination node, "imps_org" denotes the static importance value of the origination node, "imps" denotes the static importance value of the destination node, "prop_rate" denotes the minimum propagation rate of importance value of all the links connected to the destination node, and "distance" denotes the number of links from the origination node to the destination node.
Equation 2 is based on the following principles:

i) A degree of association between nodes is considered to be an attribute value of the link connecting the nodes, and defines the propagation rate of the link;
ii) The propagation rate of importance value is low between nodes having a low degree of association;
iii) As the distance (the number of links between the origination node and the destination node) increases, the influence of the importance value of the origination node decreases.

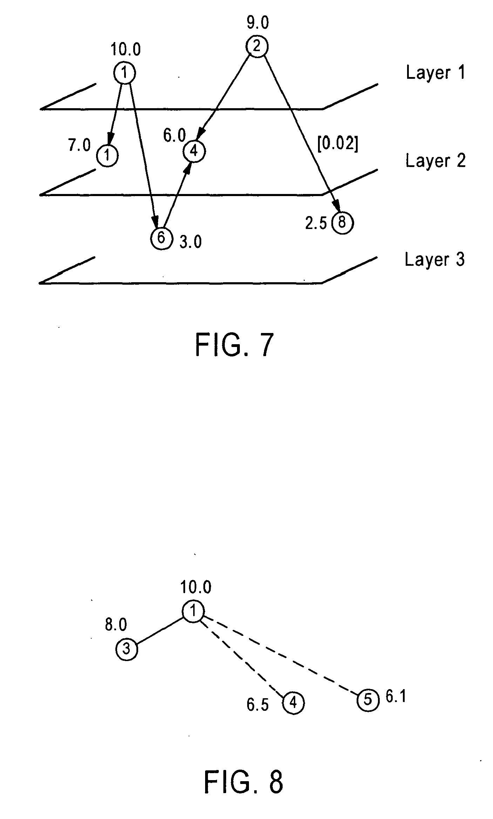

A description will now be given of an example of how dynamic importance values are updated with reference to Fig. 7. The static importance values of the nodes are given above (Fig. 3), i.e., node 1: 10.0; node 2: 9.0; node 3: 7.0;

node 4: 6.0; node 6: 3.0; and node 8: 2.5. The attribute values of the links, given above in Fig. 3, are used as the propagation rates of importance value of the links, i.e., link 2_8 and link 5_9: 0.02; and the other links: 0.1. The dynamic importance values are obtained for node 3, node 4, and node 8 when node 1 and node 2 are respectively set to the origination node.

(a) The dynamic importance values of node 3 and node 4 are obtained when node 1 is set to the origination node as follows:

For a transition: node 1 → node 3, the dynamic importance value of node 3 is:

$$\texttt{impd} = \texttt{imps} + (\texttt{imps\_org} \times \texttt{prop\_rate} \times 1/\texttt{distance})$$

$$= 7 + (10 \times 0.1 \times 1/1)$$

$$= 8$$

For a transition: node 1 → node 6 → node 4, the dynamic importance value of node 4 is:

$$\texttt{impd} = 6 + (10 \times 0.1 \times 1/2)$$

$$= 6.5$$

(b) The dynamic importance values of node 4 and node 8 are obtained when node 2 is set to the origination node as follows:

Foratransition: node 2 → node 4, the dynamic importance value of node 4 is:

$$\texttt{impd} = 6 + (9 \times 0.1 \times 1/1)$$

$$= 6.9$$

For a transition: node 2 → node 8, the dynamic importance value of node 8 is:

$$\texttt{impd} = 2.5 + (9 \times 0.02 \times 1/1)$$

$$= 2.68$$

As a result, the dynamic importance values of node 4 is 6.5 if node 1 is set to the origination node, and 6.9 if node 2 is set to the origination node.

Accordingly, the calculation results show that the importance value of node 4 increases more when the node of interest is moved to node 4 from node 2, which is directly connected to node 4 and thus has a higher degree of association, than when the node of interest is moved to node 4 from node 1, which is not directly connected to node 4 and thus has a lower degree of association.

(5) Output or display of node information

A description will now be given of a method for facilitating visualization of the associative network data shown in Fig. 3 in accordance with Embodiment 1, based on the above description.

(a) Grouping and layering of nodes (Fig. 4)

As described above, nodes are grouped according to their importance values to construct the layered structure 400.

(b) Selection of origination node (Fig. 4)

Node 1 is selected as the origination node among the nodes on layer 1.

(c) Extraction of nodes on layer 2 (Fig. 4)

There are node 3, node 4, and node 5 on layer 2.

(d) Checking on connectivity of nodes on layer 2 to the origination node (Fig. 4)

Then the connectivity of the nodes on layer 2 with the origination node (node 1) is checked.

node 3: connected; distance from node 1 = 1
node 4: connected; distance from node 1 = 2
node 5: connected; distance from node 1 = 2

(e) Calculation of dynamic importance values of nodes on layer 2 (Fig. 7)

The dynamic importance values of nodes 3, 4, and 5 are respectively calculated.
For the transition: node 1 → node 3, the dynamic importance value of node 3 is:

$$\texttt{impd} \ = \ 7 \ + \ (10 \ \times \ 0.1 \ \times \ 1/1)$$

$$= \ 8$$

For the transition: node 1 → node 6 → node 4, the dynamic importance value of node 4 is:

$$\texttt{impd} \ = \ 6 \ + \ (10 \ \times \ 0.1 \ \times \ 1/2)$$

$$= \ 6.5$$

For a transition: node 1 → node 9 → node 5, the dynamic importance value of node 5 is:

$$\texttt{impd} \ = \ 6 \ + \ (10 \ \times \ 0.02 \ \times \ 1/2)$$

$$= \ 6.1$$

(f) Output or display of updated information

Fig. 3 shows all nodes and links in the network. If the entire information is displayed at the same time, it is difficult to understand the importance and the connectivity of the nodes. Fig. 8 is a data visualization in accordance with this embodiment of the present invention and shows only the nodes on layer 2, i.e., nodes 3, 4, and 5, and the links connecting these nodes to node 1 upon selecting node 1 as the origination node. The link 1_3 is represented as a solid line to show that node 1 and node 3 are connected directly (i.e., at a distance of "1") . The link 1_4 and link 1_5 are respectively represented as broken lines to show that node 1 and node 4, and node 1 and node 5 are not directly connected. In this particular embodiment, "not connected directly" means that the distance between the nodes is 2 or more.
It should be noted that the importance values of node 3, node 4, and node 5 are dynamically changed. The importance value of node 3 is updated from 7.0 (Fig. 3) to 8.0 (Fig. 8) to indicate that node 3 has a higher degree of association with node 1. Although node 4 and node 5 both have the static importance value of 6.0 and are both at a distance of 2 from node 1, the dynamic importance values of node 4 and node 5 are not the same, namely, 6.5 and 6.1, respectively. A reason is that since the path from node 1 to node 5 includes a link, namely link 5_9, having a low propagation rate, i.e., the attribute value of link 5_9 is only 0.02, the dynamic importance value of node 5 is lower than that of node 4.

Thus, according to an aspect of the present invention, the importance values of nodes are dynamically updated according to which node is selected as the origination node and the attribute values of the links between the origination node and the remaining nodes.

(6) Management of access history

In accordance with an aspect of the present invention, a history of accesses can be recorded. As a result, it is possible to go back to a certain time point, and to precisely reproduce the data visualization (i.e., the selection of an origination node, and the transition from the origination node to a destination layer or node to be displayed) at that time point. The state of access is preferably represented in Format 3, and is stored as a basic history element. [origination node, destination layer, distance] (Format 3)

The access history in this embodiment is represented as follows:

[NULL, destination layer_1, 1]
[node 1, destination layer_2, 1]
[node 4, destination layer_3, 1]

The origination node on destination layer_1 is set to "NULL" to show that this state is the initial state, and there was no previous origination node. In this way, a sequence of basic history elements can be managed as array objects.

Embodiment 2

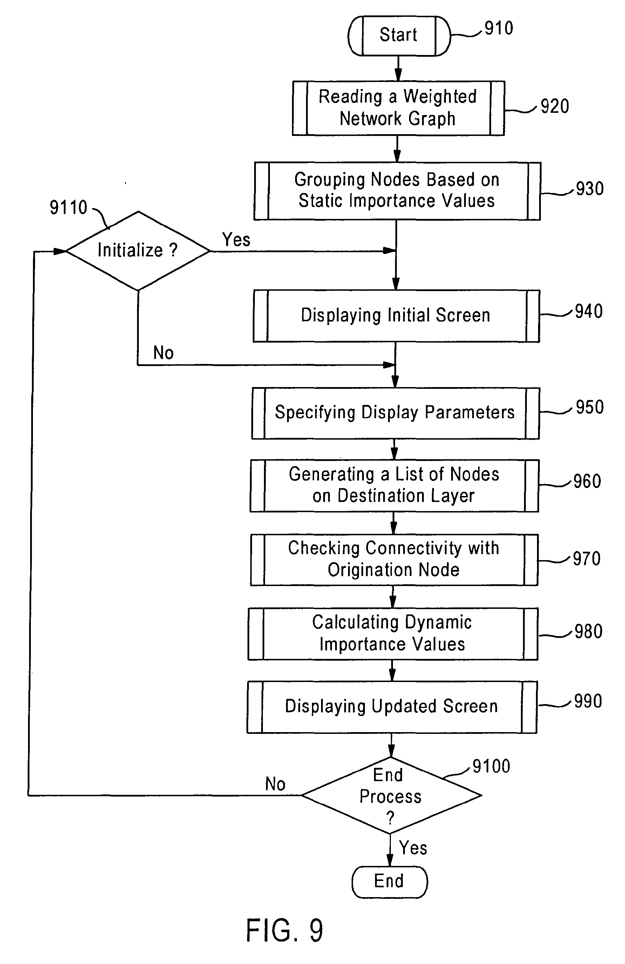

A description will now be given of an example of a process for displaying, or otherwise outputting, a visualization of associative network data of a network, which includes nodes arranged in the order of their importance values and links connecting the nodes, according to the above description and with reference to a flowchart shown in Fig. 9.

Step 910: Start.

Step 920: Reading a network graph weighted based on the node static importance values.

Step 930: Grouping the nodes in the order of their static importance values.

Step 940 : Displaying or otherwise outputting an initial screen or data visualization.

Step 950: Specifying display parameters, such as an origination node, a distance from the origination node, and a destination layer or nodes.

Step 960: Generating a list of nodes on the destination layer.

Step 970: Checking the connectivity of the nodes on the destination layer with the origination node

Step 980: Calculating dynamic importance values of the nodes on the destination layer.

Step 990: Displaying or otherwise outputting a updated data visualization.

Step 9100: Determining whether the process should be terminated.

Step 9110: Initializing process.

A detailed description will now be given with reference to the flowchart shown in Fig. 9.

First, data of a network graph weighted based on the node static importance values is read or input (Step 920).

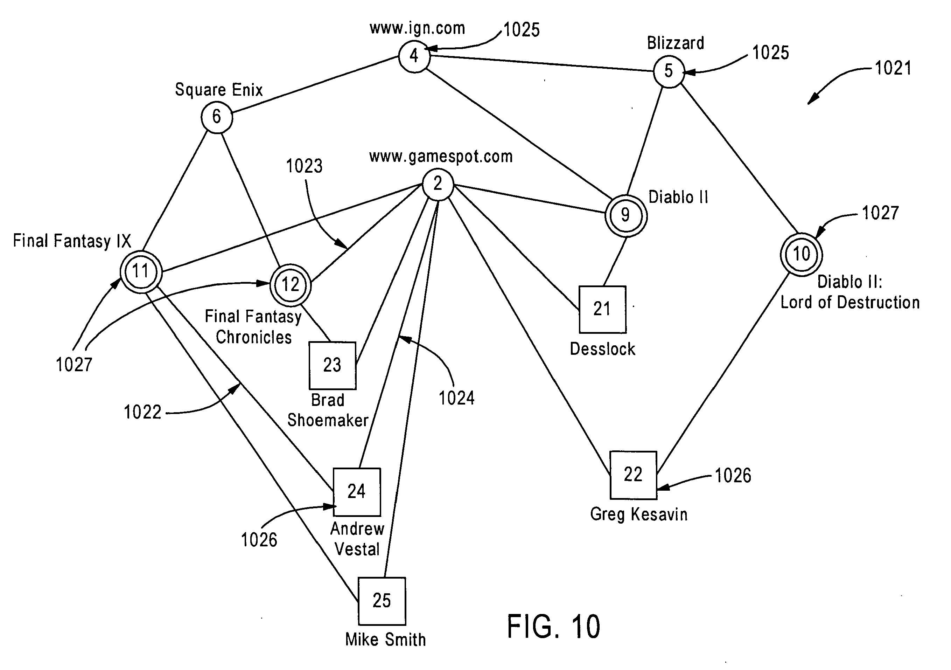

Fig. 10 shows an example of "Trust Network Graph". "Trust Network Graph" is a graph (associative network data) generated by the method disclosed in JP 2004-227281 A which is incorporated by reference herein in its entirety. In the example of Fig. 10, a network graph 1021 represents relationships among numerous elements of online gaming (such as products, creators, and experts etc). The data are read out from the storage unit 210 or input via the input unit 260 shown in Fig. 2. A description will now be given of some nodes and links of interest in Fig. 10:

node 12        : Final Fantasy Chronicles (product)
node 11        : Final Fantasy IX (product)
node 24        : Andrew Vestal (expert, reviewer)
node 2         : gamespot.com (web site providing information on games)
link 11_24 :   this relationship represents a review article by Andre Vestal on Final Fantasy IX
link 12_2       : this relationship represents a launch of Final Fantasy Chronicles by gamespot.com
link 2_24       : this relationship represents a publication of an article written by Andrew Vestal on gamespot.com

As can be seen in Fig. 10, path 11 → 24 (1022) indicates that "Andrew Vestal" (node 24) and "Final Fantasy IX" (node 11) are connected directly (at a distance of "1") through the relationship of Andrew Vestal's writing the review article on Final Fantasy IX. Path 12 → 2 → 24 (1023, 1024) indicates that "Final Fantasy Chronicles" (node 12) and "Andrew Vestal" (node 24) are indirectly connected via gamespot.com (node 2) which launches Final Fantasy Chronicles (node 12) and publishes the review article by Andrew Vestal. Upon focusing on the relationships between the products (node 11 and node 12) and the expert/reviewer (node 24), the second path 12 → 2 → 24 (1023, 1024) has a lower degree of association than the first path 11 → 24 (1022), resulting in a smaller dynamic importance value of node 24.

Next, the nodes are grouped based on their initial or static importance values (Step 930).

The nodes shown in Fig. 10 are grouped as follows based on the trust (importance) values of the respective nodes.

(A) Nodes (such as 1025) representingmedia (e.g., Web sites) and manufacturers (2, 4 to 6)
Trust value → small

(B) Nodes (such as 1026) representing experts (21 to 25)
 Trust value → medium

(C) Nodes (such as 1027) representing products (9 to 12)
Trust value → large

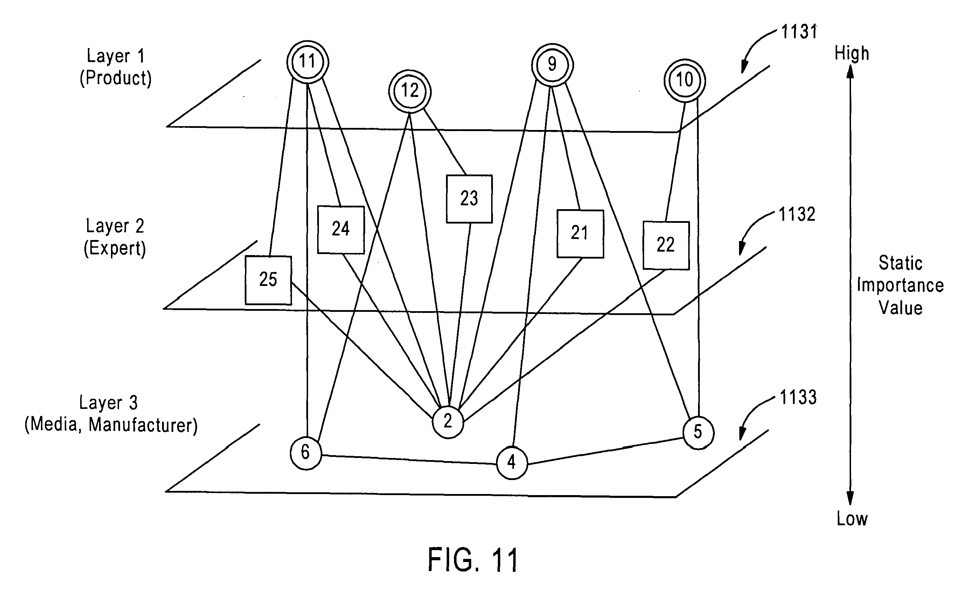

Fig. 11 shows how the nodes belonging to groups (A) to (C) are respectively classified to three corresponding layers, namely, products (layer 1, 1131), experts (layer 2, 1132), and media and manufactures (layer 3, 1133). In this classification in accordance with the embodiment of the present invention, the nodes are layered or grouped according to their static importance values calculated from the trust values of the nodes.

Next, an initial screen or data visualization is displayed or otherwise outputted (Step 940).

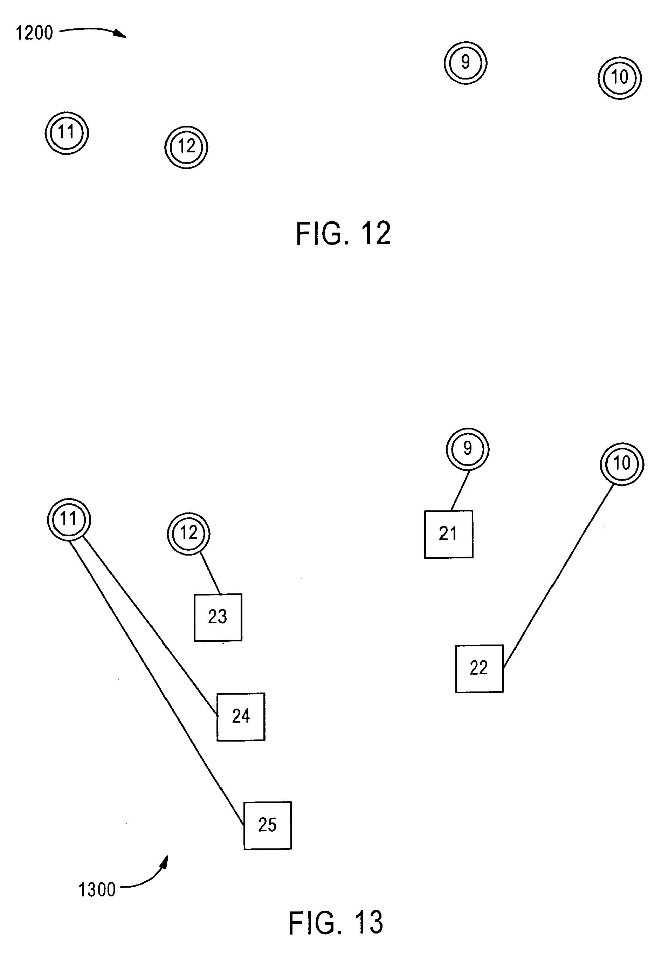

Fig. 12 shows such an initial screen or data visualization 1200 with the nodes (9 to 12) on layer 1, that is an uppermost layer with highest node trust values, are first displayed. A double circle is used to represent each node on layer 1 in the screen.

Next, display parameters are specified (Step 950).

In Step 950, an origination node, a distance from the origination node within which nodes are subject to display, and a destination layer to be displayed are input, e.g., via the operating unit 250 of the apparatus in Fig. 2. Note that the origination node can be arbitrarily designated. In Embodiment 2, 2 and layer 2 are input respectively as the distance of nodes subject to display, and the destination layer.

Next, a list of nodes on the destination layer is generated (Step 960).

Such a list includes nodes 21 to 25 on layer 2 (refer to Fig. 11).

Nodes on layer 2
node 21, node 22, node 23, node 24, node 25

Next, the connectivity between the nodes on the destination layer with the origination node is checked (Step 970).

If node 11 is designated as the origination node, all nodes 21 to 25 are connected to the origination node 11 (Fig. 11). The distances from the origination node 11 to the destination nodes are represented as follows.

Distances from origination node 11 to destination nodes on layer 2:

node 21: 2
node 22: 2
node 23: 2
node 24: 1
node 25: 1

Next, dynamic importance values of the destination nodes are calculated (Step 980).

The dynamic importance values of the destination nodes upon designating node 11 as the origination node are calculated according to Equation 2:

$$impd = imps + (imps\_org \times prop\_rate \times 1/distance).$$

The calculation results are omitted for the sake of simplicity.

Next, an updated data visualization or screen is displayed or otherwise outputted (Step 990).

Fig. 13 shows an updated data visualization 1300 upon a transition to layer 2 without designating an origination node. If an origination node is not designated, all nodes (nodes 21 to 25) on layer 2 are selected and displayed. In addition, there are displayed only the links directly connected to the nodes on layer 1. In this case, importance values, which are static importance values, may also be displayed.

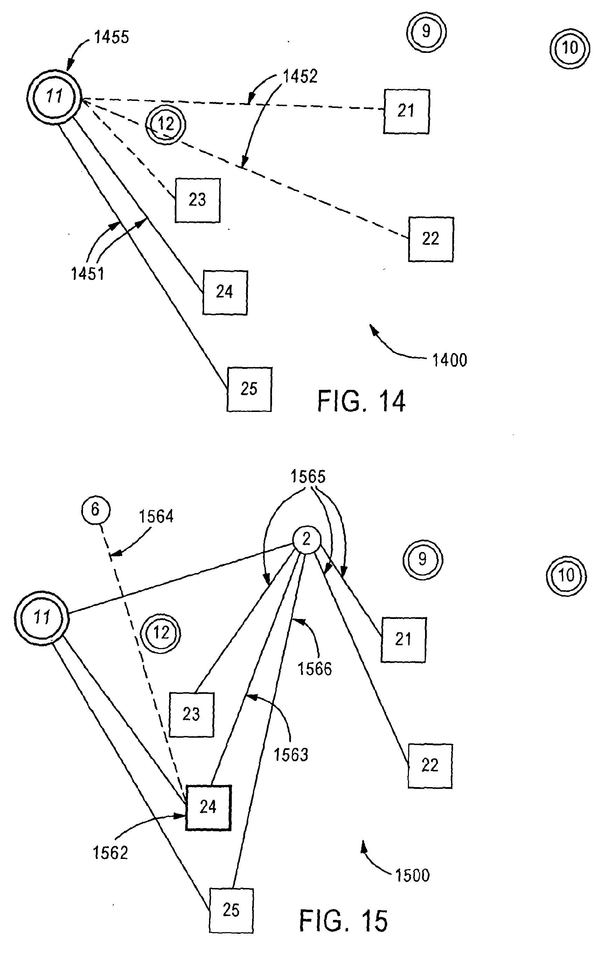

If one of the nodes on layer 1, e.g., node 11, is designated as the origination node and the transition takes place to layer 2, an updated data visualization 1400 is displayed or otherwise outputted as shown in Fig. 14. In this case, there are selected and displayed all destination nodes (21 to 25) which are on layer 2 and are connected to the designated origination node 11. In addition, node 11 is displayed differently from other nodes on the same layer 1, e.g., with a "thick double circle," 1455, to indicate that node 11 is designated as the origination node. Nodes 24 and 25 are connected to node 11 directly (at a distance of 1) , and thus are displayed with their respective links 1451 to node 11. If the threshold distance from the origination node is set to 2 (Step 950), all the other destination nodes (nodes 21 to 23) having the distance of 2 are also displayed. However, since nodes 21-23 are not connected to node 11 directly (at a distance of 1) , links 1452 from nodes 21-23 to node 11 are represented by broken lines to be distinguishable from links 1451 in Fig. 14. The importance values may be displayed and are dynamic importance values calculated with node 11 as the origination node.

An updated data visualization may further be generated upon transition to a further layer, e.g., layer 3, when a new node is designated.

Fig. 15 shows an another, updated display or data visualization generated when a different node, such as node 24 on layer 2, is designated and the transition takes place to a next layer, e.g., layer 3. When node 24 is designated, e.g., by the user's selecting node 24 from data visualization 1400 using operating unit 250, as the new origination node and the transition is carried out to layer 3, new destination nodes to be displayed are nodes 2, 4, 5, and 6 on layer 3 (Fig. 11).

Among these nodes, there are actually displayed node 2, which is connected to node 24 directly (at a distance of 1), and node 6, which is connected to node 24 at a distance of 2. In addition, node 24 is displayed differently from other nodes on the same layer 2, e.g., with a "thick frame" 1562, to indicate that node 24 is designated. In addition, a link 24_2 is represented as a solid line 1563, and an link 24_6 is represented as a broken line 1564. Nodes 21, 22, and 23 are connected to node 11 via node 2 at a distance of 2 (refer to Fig. 11), and their actual connections 1565 can be displayed if node 2 is displayed. Simultaneously, nodes 21, 22, and 23 are directly connected to node 2, and links 2_21, 2_22, 2_23, 2_24, and 2_25 are thus represented as solid lines 1563, 1565, and 1566.

Next, the process determines whether it should be terminated (Step 9100).

The user provides an input, e.g., via operating unit 250, indicating whether the program should be terminated or not. If the user does not terminate the program, the process proceeds to Step 9110.

Next, the process determines whether initialization should be carried out (Step 9110).

The user provides an input, e.g., via operating unit 250, indicating whether to initialize the displayed data or not. If the initialization is to be carried out, the program and data are both initialized, and the process proceeds to Step 940. If the initialization is not carried out, the process proceeds to Step 950.

An advantage of the disclosed embodiments is that, in a large scale network data including an enormous amount of nodes and links, it is now possible to selectively, distinctively display nodes directly connected to a designated node as well as nodes having high importance values selected from the associated nodes, in accordance with predetermined rules based on the node trust (importance) values.

Another advantage of the disclosed embodiment is that it is now also possible to generate data visualizations reflecting intentions of a user by dynamically updating the importance values of the destination nodes. The dynamic update is advantageously based on how the origination node is selected, the differences in the attribute values of the links connecting the nodes, and the like, and the arrangement of nodes in a layered structure based on the order of their importance values.

While there have been described and illustrated specific embodiments of the invention, it will be clear that variations on the details of the embodiment specifically illustrated and described may be made without specifically departing from the true spirit and scope of the invention as defined in the appended claims.

## Claims

1. An apparatus for displaying associative network data including nodes having static importance values and being arranged in an order of the static importance values, and links connecting the nodes, said apparatus comprising:

> (a) means for segmenting the nodes into a number of layers according to the static importance values of the nodes;
> (b) means for displaying all nodes on a first layer among said layers;
> (c) means for accepting a designation of a first node among the nodes on the first layer, a designation of a first distance from the first node, and a designation of a second layer among said layers; and
> (d) means for displaying a second node existing within the first distance from the first node on the second layer, and displaying at least one of (d-1) a line connecting the first node and the second node and (d-2) the static importance value of the second node.

2. The apparatus according to claim 1, further comprising:

   (e) means for accepting a designation of the second node on the second layer, and a designation of a second distance from the second node; and
   (f) means for displaying a third node existing within the second distance from the second node, and displaying at least one of (f-1) a line connecting the second node and the third node and
   (f-1) the static importance value of the third node.

3. The apparatus according to claim 1, wherein:

   the means for segmenting includes one of:

      (a-1) means for setting a constant number of nodes in each of said layers; and
      (a-2) means for setting a range of importance values for the nodes in each of said layers.

4. The apparatus according to claim 1, further comprising means for changing a property of the line connecting the nodes according to the distance between the nodes.

5. The apparatus according to claim 1, further comprising means for calculating and displaying a dynamic importance value of the second node based on information including at least one of (i) an attribute value associated with the link between the nodes, (ii) the static importance value of the first node, (iii) the static importance value of the second node, and (iv) the first distance.

6. The apparatus according to claim 5, comprising means for calculating the dynamic importance (impd) value of the second node according to the following equation:

$$impd = imps + (imps\_org \times prop\_rate \times 1/distance)$$

   where "imps_org" denotes the static importance value of the first node, "imps" denotes the static importance value of the second node, "prop_rate" denotes a multiplier obtained from the attribute value, and "distance" denotes the first distance.

7. A method for displaying associative network data including nodes having static importance values and being arranged in an order of the static importance values, and links connecting the nodes, said method comprising the steps of:

   (a) segmenting the nodes into a number of layers according to the static importance values of the nodes;
   (b) displaying all nodes on a first layer among said layers; (c) accepting a designation of a first node among the nodes on the first layer, a designation of a first distance from the first node, and a designation of a second layer among said layers; and
   (d) displaying a second node existing within the first distance from the first node on the second layer, and displaying at least one of (d-1) a line connecting the first node and the second node and (d-2) the static importance value of the second node.

8. The method according to claim 7, further comprising the steps of:

   (e) accepting a designation of the second node on the second layer, and a designation of a second distance from the second node; and
   (f) displaying a third node existing within the second distance from the second node, and displaying at least one of (f-1) a line connecting the second node and the third node and (f-2) the static importance value of the third node.

9. The method according to claim 7, further comprising the step of changing a property of the line connecting the first node and the second node according to the distance between the first node and the second node.

**10.** The method according to claim 7, further comprising the step of calculating and displaying a dynamic importance value of the second node based on information including at least one of (i) an attribute value associated with the link between the nodes, (ii) the static importance value of the first node, (iii) the static importance value of the second node, and (iv) the first distance.

**11.** A computer program comprising computer program code means for performing all of the steps of any of claims 7 to 10 when run on said computer.

**12.** A computer program as claimed in claim 11 embodied on a computer-readable medium.

**13.** An apparatus for displaying associative network data including nodes having static importance values, and links connecting the nodes, said apparatus comprising:

(a) a segmenting element for segmenting the nodes into a number of layers according to the static importance values of the nodes; (b) a displaying element for displaying all nodes on a first layer among said layers;
(c) an inputting element for accepting a designation of a first node among the nodes on the first layer, a designation of a first distance from the first node, and a designation of a second layer among said layers; and
(d) a displaying element for displaying a second node existing within the first distance from the first node on the second layer, and displaying at least one of (d-1) a line connecting the first node and the second node and (d-2) the static importance value of the second node.

FIG. 1

FIG. 2

FIG. 3

FIG. 4

FIG. 5

FIG. 6

FIG. 7

FIG. 8

Start —910

Reading a Weighted
Network Graph —920

Grouping Nodes Based on
Static Importance Values —930

9110 — Initialize ? —Yes

Displaying Initial Screen —940

No

Specifying Display Parameters —950

Generating a List of Nodes
on Destination Layer —960

Checking Connectivity with
Origination Node —970

Calculating Dynamic
Importance Values —980

Displaying Updated Screen —990

No — End
Process
? —9100

Yes

End

FIG. 9

FIG. 10

EP 1 640 919 A2

FIG. 11

1200

⑨ ⑩

⑪ ⑫

# FIG. 12

⑨ ⑩

⑪ ⑫

| 21 |

| 23 |

| 24 |

| 22 |

| 25 |

1300

# FIG. 13

FIG. 14

FIG. 15